# EUROPÄISCHE PATENTSCHRIFT

(11) **EP 2 397 634 B1**
(45) Veröffentlichungstag und Bekanntmachung des Hinweises auf die Patenterteilung: **16.07.2014**
(21) Anmeldenummer: 11004175.3
(22) Anmeldetag: 20.05.2011
(51) Int. Cl.: E05F 1/12

(54) **Verfahren zum Einbau einer Vorrichtung zum federunterstützten Verschwenken einer Klappe oder Tür in ein Fahrzeug**
Method for installing a device for spring assisted pivoting of a flap or door in a vehicle
Procédé d'intégration d'un dispositif de basculement assisté par ressort d'un clapet ou d'une porte dans un véhicule

(30) Priorität: 16.06.2010 DE 102010023971
(43) Veröffentlichungstag der Anmeldung: 21.12.2011
(73) Patentinhaber: Audi AG, 85045 Ingolstadt (DE)
(72) Erfinder: Bartsch, Knut, 85560 Ebersberg (DE); Sinseder, Franz, 84405 Dorfen (DE); Schindler, Manfred, 85570 Markt Schwaben (DE); Binder, Franz, 85101 Lenting (DE); Sendtner, Jürgen, 85095 Denkendorf-Zandt (DE)

(56) Entgegenhaltungen:
- WO-A1-2010/025817

## Beschreibung

Verfahren zum Einbau einer Vorrichtung zum federunterstützten, insbesondere zum durch ein Drehstabfedersystem unterstützten, Verschwenken einer Klappe oder Tür gegen die Schwerkraft zwischen einer Geschlossenstellung und einer Offenstellung mit Mitteln zum Beeinflussen des von dem Drehstabfedersystem abzugebenden Drehmoments in ein Fahrzeug.

Vorrichtungen der eingangs genannten Art werden im Kraftfahrzeugbau zur Verringerung der Betätigungskräfte beim Verschwenken einer Klappe oder Tür gegen die Schwerkraft zwischen einer Geschlossenstellung und einer Offenstellung und gegebenenfalls für eine Selbsthaltung der Klappe oder Tür in einer oder mehreren Öffnungsstellungen verwendet.

Verschiedenartige Vorrichtungen zum federunterstützten Verschwenken einer Klappe oder Tür sind in der WO 2010/025817 A1 gezeigt. Beispielhaft sei hier das Ausführungsbeispiel nach Fig. 1 beschrieben, bei dem mehrere Drehstabfedern parallel und mäanderförmig angeordnet und drehfest miteinander vorgespannt in einem Drehstabfedersystem verbunden sind. Eine der äußeren Drehstabfedern ist in einem Lagerbock drehfest angeordnet, während die andere drehfest mit einem Ende eines längenveränderlichen Hebel verbunden ist. Das andere Ende des längenveränderlichen Hebels ist in einer Steuerkulisse geführt und steht zudem mit einer Koppelstange in Einriff, deren translatorische Bewegung auf ein rotatorisch bewegliches Klappen-oder Türscharnier übertragbar ist. Durch den in der Steuerkulisse geführten längenveränderlichen Hebel kann in Abhängigkeit vom Öffnungswinkel der Klappe oder Tür ein entsprechendes Gegenmoment in das Klappen- oder Türscharnier eingeleitet werden, das dem von der Gewichtskraft der Klappe oder Tür verursachten Drehmoment entgegenwirkt.

Aus dem genannten Stand der Technik ist jedoch kein Verfahren bekannt, welches einen vorteilhaften Einbau einer derartigen Vorrichtung zum federunterstützten Verschwenken einer Klappe oder Tür in ein Fahrzeug beschreibt. Als besondere Schwierigkeit erweist sich hierbei die sichere Handhabung der Vorrichtung mit vorgespanntem Federspeicher.

Aufgabe der vorliegenden Erfindung ist es daher ein einfaches, schnelles und sicheres Verfahren zum Einbau einer Vorrichtung zum federunterstützten Verschwenken einer Klappe oder Tür in ein Fahrzeug bereitzustellen.

Diese Aufgabe wird durch die Merkmale des Patentanspruchs 1 gelöst.

Verfahren zum Einbau einer Vorrichtung zum federunterstützten Verschwenken einer Klappe oder Tür gegen die Schwerkraft zwischen einer Geschlossenstellung und einer Offenstellung in ein Fahrzeug, mit wenigstens einem Federspeicher und einer damit gekoppelten Nachführkulisse zur Beeinflussung eines von dem Federspeicher bereitgestellten Drehmoments, wobei ein der Klappe oder Tür zugeordneter und karosserieseitig angelenkter Scharnierhebel von einer Koppelstange der Nachführkulisse rotatorisch betätigbar ist, umfassend die folgenden Schritte:
- Temporäres Festsetzen der Koppelstange in einer definierten Stellung, die sich bei einer Einbaustellung der Klappe oder Tür einstellen würde;
- Halten der Klappe oder Tür in der Offenstellung oder einer Zwischenstellung oberhalb der Einbaustellung;
- Anordnen der Vorrichtung im Fahrzeug;
- Absenken der Klappe oder Tür aus der Offenstellung oder Zwischenstellung in die Einbaustellung und Verbinden des Scharnierhebels mit der Koppelstange;
- Freigeben der Koppelstange.

Indem das beschriebene Verfahren zum Einbau einer Vorrichtung zum federunterstützten Verschwenken einer Klappe oder Tür in ein Fahrzeug angewandt wird, kann die Vorrichtung außerhalb des Fahrzeugs bereits nahezu vollständig aufgebaut werden. Dadurch entfällt die schwierige Montage in den beengten Bauräumen der Fahrzeugkarosserie und die Vorrichtung kann folglich bereits mit vorgespanntem und voreingestelltem Federspeicher für den Einbau in das Fahrzeug bereitgestellt werden. Dazu wird die Koppelstange in einer definierten Stellung mittelbar oder unmittelbar fixiert. Die definierte Stellung der Koppelstange entspricht der Stellung, die sie bei einer mit ihr verbundenen Klappe oder Tür in Einbaustellung einnehmen würde. Das Fahrzeug kann indes die vorhergehenden Produktionsschritte, beispielsweise des Verzinkens oder Lackierens, bereits mit befestigter Klappe oder Tür durchlaufen, so dass die Klappe oder Tür in selber Weise wie die restliche Karosserie behandelbar ist. Die Klappe oder Tür ist zu diesem Zweck über beiderseits angeordnete Scharnierhebel karosserieseitig verschwenkbar an der Karosserie des Fahrzeugs befestigt. Für den Einbau der Vorrichtung in das Fahrzeug wird die Klappe oder Tür in ihre Offenstellung oder eine Zwischenstellung zwischen Einbaustellung und Offenstellung verschwenkt und dort gehalten. Anschließend wird die vorkonfektionierte Vorrichtung in das Fahrzeug eingebaut und befestigt. Durch das anschließende Absenken der Klappe oder Tür in die Einbaustellung tritt der jeweilige Scharnierhebel mit der entsprechenden Koppelstange in Kontakt und kann mit dieser verbunden werden. Durch die Aufhebung der Festsetzung der Koppelstange wird die Vorrichtung freigegeben und der Federspeicher übernimmt die weitere Unterstützung der Klappe oder Tür. Das von dem Federspeicher abgegebene Drehmoment wird in der Nachführkulisse zu einem passenden und an dem Scharnierhebel bereitzustellenden Gegenmoment umgewandelt, welches dem vom Öffnungswinkel abhängigen Gewichtsmoment der Klappe oder Tür entgegenwirkt. Durch geeignete Ausführung der Nachführkulisse ist beispielsweise eine Selbsthaltung der Klappe oder Tür in jeder Stellung entlang des Verschwenkwegs möglich. Als Türen eignen sich insbesondere um eine horizontal quer zum Fahrzeug verlaufende Drehachse verschwenkbare Türen, wie beispielsweise Scherentüren.

In einer bevorzugten Ausführung entspricht die Einbaustellung dem halben Öffnungswinkel der Klappe oder Tür zwischen Geschlossenstellung und Offenstellung. Wird als Einbaustellung der halbe Öffnungswinkel der Klappe oder Tür definiert, so ist der Federspeicher der Vorrichtung vorzugsweise so auszubilden, dass dieser in der Einbaustellung gleiche Kraftreserven in die beiden möglichen Verschwenkrichtungen vorhält. In der Regel entspricht die Einbaustellung der Stellung mit dem maximalen Momentenbedarf zur Unterstützung der Klappe oder Tür.

In einer bevorzugten Ausführung ist zum Festsetzen der Koppelstange ein Sicherungsstift in die Nachführkulisse einsetzbar. Das mittelbare oder unmittelbare Festsetzen der Koppelstange, durch einen in die Nachführkulisse eingesetzten Sicherungsstift, erlaubt eine schnelle Aufhebung der Festsetzung, durch Abziehen des Sicherungsstifts, nachdem der Scharnierhebel auf der Koppelstange aufgelegt wurde. Der Sicherungsstift ist bevorzugt so anzuordnen, dass eine leichte Zugänglichkeit vom Innenraum des Fahrzeugs gewährleistet ist.

In einer bevorzugten Ausführung ist der Federspeicher als Drehstabfedersystem, bestehend aus mehreren parallel mäanderförmig angeordneten und drehfest miteinander verbundenen Drehstabfedern, ausgebildet. Dazu werden gerade Drehstabfedern vorzugsweise mit endseitig angeordneten Koppelelementen form- oder stoffschlüssig zu dem Drehstabfedersystem verbunden. Die Koppelelemente sind vorzugsweise so anzuordnen, dass diese in der Einbaustellung der Klappe oder Tür und bei einem vortordierten Drehstabfedersystem im Wesentlichen waagrecht in einer Ebene mit gleichmäßigen Verdrehwinkel in beide Richtung ausgerichtet sind. Die an das Drehstabfedersystem angeschlossene Nachführkulisse weist einen, vorzugsweise mittels einer Gleitsteinanordnung in einer Steuerkurve geführten längenveränderlichen Hebel auf, der drehfest mit einer Hebel-Drehstabfeder verbunden ist und an dem die Koppelstange, vorzugsweise direkt an der Gleitsteinanordnung, angreift. Die Gleitsteinanordnung ist vorzugsweise so ausgebildet, dass sich an dem längenveränderlichen Hebel eine Gleitfläche befindet, auf der ein Gleitstein verschiebbar angeordnet ist. Der Gleitstein lagert eine Laufrolle, die in der Steuerkurve geführt ist. Des weiteren weist die Nachführkulisse einen Lagerbock auf, der die Hebel-Drehstabfeder und eine Lager-Drehstabfeder lagert. Zudem übernimmt der Lagerbock die Funktion eines Gehäuses zum Schutz der Bauteile. Durch eine derartige Ausbildung von Federspeicher und Nachführkulisse lässt sich eine Vorrichtung besonders kompakt herstellen, was Vorteile bei der Bauraumausnutzung bietet und den Einbau in das Fahrzeug erleichtert.

In einer bevorzugten Ausführung ist an der Lager-Drehstabfeder eine Einstelleinrichtung drehfest angeordnet, mit der die Vorspannung des Drehstabfedersystems beeinflussbar ist. Durch die Einstelleinrichtung kann die Vorspannung des Drehstabfedersystems nach dem Einbau der Vorrichtung in das Fahrzeug nachträglich korrigiert werden, um damit beispielsweise Fertigungstoleranzen der Bauteile oder variierende Gewichtsmomente der Klappe oder Tür auszugleichen.

In einer bevorzugten Ausführung setzt der Sicherungsstift den längenveränderlichen Hebel gegenüber dem Lagerbock fest. Durch das Festsetzen des längenveränderlichen Hebels gegenüber dem Lagerbock mittels eines Sicherungsstifts ist eine besonders einfache mittelbare Festsetzung der Koppelstange möglich. Das von dem vorgespannten Federspeicher abgegebene Drehmoment wird zudem bereits an einem sehr frühen Punkt entlang des Kraftwegs durch die Nachführkulisse abgefangen, so dass die nachgeordneten Bauteile während der Lagerung und des Transports der vorgespannten Vorrichtung weitestgehend kraftfrei bleiben.

In einer bevorzugten Ausführung sind zwei Vorrichtungen spiegelsymmetrisch in einem Dachbereich des Fahrzeugs angeordnet, wobei jeder Scharnierhebel an einem Randbereich der Klappe angreift. Die spiegelsymmetrische Anordnung zweier Vorrichtungen im Dachbereich erlaubt eine unauffällige Anbringung mit guter Bauraumausnutzung und gleichmäßiger Unterstützung der Klappe, beispielsweise einer Heckklappe.

Weitere Einzelheiten, Merkmale und Vorteile der Erfindung ergeben sich aus der nachstehenden Beschreibung eines bevorzugten Ausführungsbeispiels unter Bezugnahme auf die Zeichnungen.

Darin zeigen:
Fig. 1 ein Fahrzeug mit eingebauter Vorrichtung zum federunterstützten Verschwenken einer Klappe in Seitenansicht;
Fig. 2 eine Vorrichtung zum federunterstützten Verschwenken einer Klappe oder Tür mit Schnitt durch die Nachführkulisse.

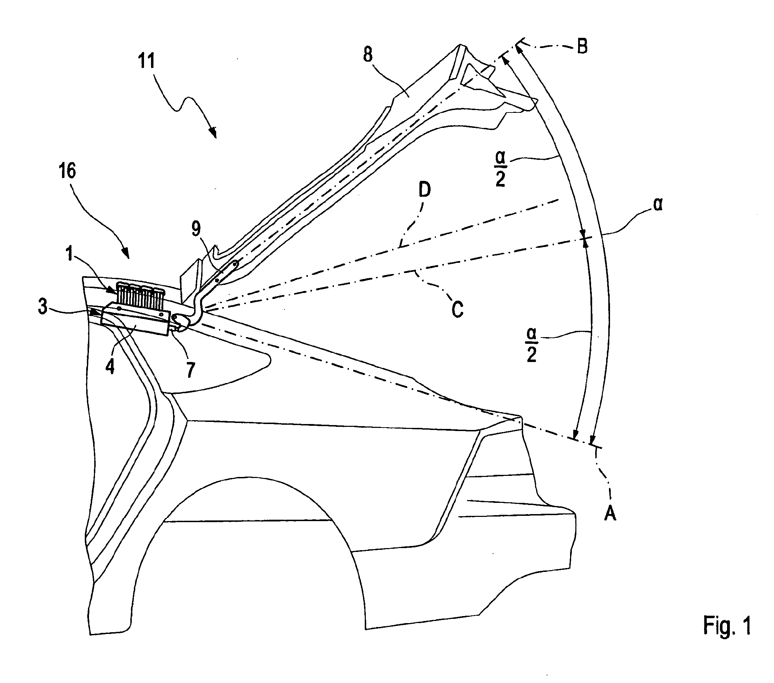

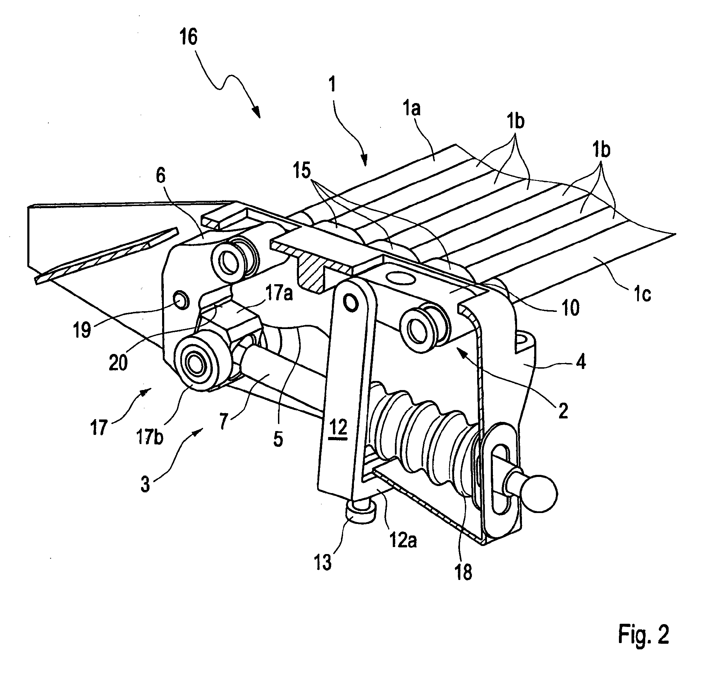

In Fig. 1 ist eine in ein Fahrzeug 11 eingebaute Vorrichtung 16 zum federunterstützten Verschwenken einer als Heckklappe ausgebildeten Klappe 8 dargestellt. Die Heckklappe 8 wird über beiderseits des Fahrzeugs 11 angeordnete Scharnierhebel 9 an einem Dachbereich der Karosserie des Fahrzeugs 11 schwenkbar befestigt. In der Geschlossenstellung A schließt die Heckklappe 8 eine zum Beladen des Fahrzeugs dienende Öffnung in der Karosserie des Fahrzeugs 11, während diese Öffnung nach Verschwenken der Heckklappe 8 um den Öffnungswinkel α in die Offenstellung B für den Zugang offen steht. Den Scharnierhebeln 9 zugeordnete Vorrichtungen 16 zum Verschwenken der Heckklappe 8 sind ebenso in dem Dachbereich der Karosserie angeordnet. Die in Fig. 2 näher dargestellte Vorrichtung 16 hat ein Drehstabfedersystem 1 als Federspeicher und eine angeschlossene Nachführkulisse 3 zur Umwandlung eines von dem Drehstabfedersystem 1 abgegebenen Drehmoments in ein am Scharnierhebel 9 bereitzustellendes Gegenmoment, welches dem von der Heckklappe 8 eingebrachten Gewichtsmoment entgegenwirkt. Die Nachführkulisse 3 greift dazu mit einer Koppelstange 7 an den Scharnierhebel 9 an. Zum Einbau der Vorrichtung 16 in das Fahrzeug 11 wird die Heckklappe 8 zunächst in eine Zwischenstellung D zwischen einer Einbaustellung C und der Offenstellung B verbracht. Die Einbaustellung C entspricht dem halben Öffnungswinkel α der Heckklappe 8 und/oder der Stellung mit dem maximalen Gegenmoment. Die bereits vorgespannte und in einer definierten Stellung arretierte Vorrichtung 16 kann anschließend in dem Dachbereich des Fahrzeugs 11 befestigt werden. Die Vorrichtung 16 ist so arretiert, dass die Koppelstange 7 in der Einbaustellung C der Heckklappe 8 auf den jeweiligen Scharnierhebel 9 trifft. Anschließend werden Koppelstange 7 und Scharnierhebel 9 miteinander verbunden und die Arretierung der mindestens einen Vorrichtung 16 gelöst.

Gemäß Fig. 2 besteht eine Vorrichtung 16 zum federunterstützten Verschwenken einer Klappe oder Tür im Wesentlichen aus einem Drehstabfedersystem 1, sowie einer angeschlossenen Nachführkulisse 3 mit Einstelleinrichtung 2. Das Drehstabfedersystem 1 wird aus mehreren parallel mäanderförmig angeordneten und drehfest über Koppelelemente 15 miteinander verbundenen Drehstabfedern 1a, 1b und 1c gebildet. Die äußeren Drehstabfedern 1a und 1c sind etwas länger als die inneren Drehstabfedern 1b, so dass diese in einen Lagerbock 4 der Nachführkulisse 3 einragen können. Der Lagerbock 4 lagert die äußeren Drehstabfedern 1a und 1c in entsprechenden Lagersitzen und bildet das Gehäuse für die weiteren Bauteile der Nachführkulisse 3. Der längenveränderliche Hebel 6 ist auf der einen Seite drehfest mit der Hebel-Drehstabfeder 1a verbunden und auf der anderen Seite über eine Gleitsteinanordnung 17 in einer Steuerkurve 5 geführt. Die Gleitsteinanordnung 17 setzt sich aus einem Gleitstein 17a, der auf einer Gleitbahn 20 des längenveränderlichen Hebels 6 longitudinal verschiebbar gelagert ist, und einer von dem Gleitstein 17a drehbar aufgenommenen Laufrolle 17b zusammen. Die Laufrolle 17b ist nahezu spielfrei in der Steuerkurve 5 geführt, so dass diese der Kontur der Steuerkurve 5 folgt und den Gleitstein 17a entlang der Gleitbahn 20 verschiebt. Die Beweglichkeit des Gleitsteins 17a kann alternativ auch durch ein Langloch oder durch elastische Lagerung des Gleitsteins 17a am oder im längenveränderlichen Hebel 6 erreicht werden. An dem Gleitstein 17a greift ferner eine Koppelstange 7 an, die unter Abdichtung durch eine Dichtungsmanschette 18 aus dem Lagerbock 4 hinausgeführt ist. Der längenveränderliche Hebel 6 kann durch einen steckbaren Sicherungsstift 19 temporär gegenüber dem Lagerbock 4 arretiert werden. Ein Einstellhebel 10 der Einstelleinrichtung 2 ist mit seinem einen Ende drehfest mit einer Lager-Drehstabfeder 1c und mit seinem anderen Ende drehbar mit einem Spannwinkel 12 verbunden. Der Spannwinkel 12 erstreckt sich mit seinem abgewinkelten Teil 12a unter die Unterseite des Lagerbocks 4. Der abgewinkelte Teil 12a trägt zudem eine Einstellschraube 13, die sich gegenüber dem Lagerbock 4 so abstützt, dass sich durch die Betätigung der Einstellschraube 13 eine Drehverstellung des Einstellhebels 10 und folglich eine Änderung der Torsion des Drehstabfedersystems 1 vornehmen lässt.

### Liste der Bezugszeichen :

- α: Öffnungswinkel
- A: Geschlossenstellung
- B: Offenstellung
- C: Einbaustellung
- D: Zwischenstellung
- 1: Drehstabfedersystem
- 1 a: Hebel-Drehstabfeder
- 1b: innere Drehstabfeder
- 1c: Lager-Drehstabfeder
- 2: Einstelleinrichtung
- 3: Nachführkulisse
- 4: Lagerbock
- 5: Steuerkurve
- 6: längenveränderlicher Hebel
- 7: Koppelstange
- 8: Klappe oder Tür
- 9: Scharnierhebel
- 10: Einstellhebel
- 11: Fahrzeug
- 12: Spannwinkel
- 12a: abgewinkelter Teil
- 13: Einstellschraube
- 15: Koppelelement
- 16: Vorrichtung zum federunterstützten Verschwenken
- 17: Gleitsteinanordnung
- 17a: Gleitstein
- 17b: Laufrolle
- 18: Dichtungsmanschette
- 19: Sicherungsstift
- 20: Gleitbahn

## Patentansprüche

1. Verfahren zum Einbau einer Vorrichtung (16) zum federunterstützten Verschwenken einer Klappe oder Tür (8) gegen die Schwerkraft zwischen einer Geschlossenstellung (A) und einer Offenstellung (B) in ein Fahrzeug (11), wobei die Vorrichtung (16) wenigstens einen Federspeicher (1) und eine damit gekoppelte Nachführkulisse (3) zur Beeinflussung eines von dem Federspeicher (1) bereitgestellten Drehmoments umfasst, wobei ein der Klappe oder Tür (8) zugeordneter und karosserieseitig angelenkter Scharnierhebel (9) von einer Koppelstange (7) der Nachführkulisse (3) rotatorisch betätigbar ist, **gekennzeichnet durch** die folgenden Schritte:
- Temporäres Festsetzen der Koppelstange (7) in einer definierten Stellung, die sich bei einer Einbaustellung (C) der Klappe oder Tür (8) einstellen würde;
- Halten der Klappe oder Tür (8) in der Offenstellung (B) oder einer Zwischenstellung (D) oberhalb der Einbaustellung (C);
- Anordnen der Vorrichtung (16) im Fahrzeug (11);
- Absenken der Klappe oder Tür (8) aus der Offenstellung (B) oder Zwischenstellung (D) in die Einbaustellung (C) und Verbinden des Scharnierhebels (9) mit der Koppelstange (7);
- Freigeben der Koppelstange (7).

2. Verfahren nach Anspruch 1, **dadurch gekennzeichnet, dass** die Einbaustellung (C) dem halben Öffnungswinkel (α) der Klappe oder Tür (8) zwischen Geschlossenstellung (A) und Offenstellung (B) entspricht.

3. Verfahren nach Anspruch 1 oder 2, **dadurch gekennzeichnet, dass** zum temporären Festsetzen der Koppelstange (7) ein Sicherungsstift (19) in die Nachführkulisse (3) einsetzbar ist.

4. Verfahren nach einem der Ansprüche 1 bis 3, **dadurch gekennzeichnet, dass** die Nachführkulisse (3) der Vorrichtung (16) einen Lagerbock (4) aufweist, der eine Hebel-Drehstabfeder (1a) und eine Lager-Drehstabfeder (1c) lagert, wobei an der Lager-Drehstabfeder (1c) eine Einstelleinrichtung (2) drehfest angeordnet ist, mit der die Vorspannung des Drehstabfedersystems (1) in einem abschließenden Verfahrensschritt nach Freigabe der Koppelstange (7) beeinflussbar ist.

5. Verfahren nach einem der Ansprüche 3 oder 4, **dadurch gekennzeichnet, dass** der Sicherungsstift (19) einen längenverändertichen Hebel (6) der Nachführkulisse (3) gegenüber dem Lagerbock (4) temporär festsetzt.

## Claims

1. Method for installing in a vehicle (11) a device (16) for spring-assisted pivoting of a tailgate or door (8) against gravity between a closed position (A) and an open position (B), the device (16) comprising at least one spring accumulator (1) and a tracker (3) which is coupled thereto for influencing a torque provided by the spring accumulator (1), a hinge lever (9) assigned to the tailgate or door (8) and articulated on the body side being rotatably actuatable by a coupling rod (7) of the tracker (3), **characterised by** the following steps:
- temporarily fixing the coupling rod (7) in a defined position which would be set when the tailgate or door (8) is in the installation position (C);
- holding the tailgate or door (8) in the open position (B) or in an intermediate position (D) above the installation position (C);
- arranging the device (16) in the vehicle (11);
- lowering the tailgate or door (8) from the open position (B) or intermediate position (D) into the installation position (C) and connecting the hinge lever (9) to the coupling rod (7); and
- releasing the coupling rod (7).

2. Method according to claim 1, **characterised in that** the installation position (C) corresponds to half the opening angle (α) of the tailgate or door (8) between the closed position (A) and open position (B).

3. Method according to either claim 1 or claim 2, **characterised in that** a securing pin (19) can be inserted into the tracker (3) for temporarily fixing the coupling rod (7).

4. Method according to any of claims 1 to 3, **characterised in that** the tracker (3) of the device (16) has a bearing block (4) which supports a lever torsion bar spring (1 a) and a bearing torsion bar spring (1 c), an adjustment apparatus (2) being non-rotatably mounted on the bearing-torsion bar spring (1 c), by means of which adjustment apparatus the preload of the torsion bar spring system (1) can be influenced in a final method step once the coupling rod (7) has been released.

5. Method according to either claim 3 or claim 4, **characterised in that** the securing pin (19) temporarily fixes a length-adjustable lever (6) of the tracker (3) in relation to the bearing block (4).

## Revendications

1. Procédé de montage d'un dispositif (16) pour le basculement assisté par un ressort d'un volet ou d'une porte (8) à l'encontre de la gravité entre une position de fermeture (A) et une position d'ouverture (B) dans un véhicule automobile (11), dans lequel le dispositif (16) comprend au moins un accumulateur à ressort (1) et une coulisse de guidage (3) couplée à celui-ci pour influencer un couple de torsion généré par l'accumulateur à ressort (1), dans lequel un levier à charnière (9) affecté au volet ou à la porte (8) et articulé côté carrosserie peut être commandé en rotation par une barre de couplage (7) de la coulisse de guidage (3), **caractérisé par** les étapes suivantes consistant à :
- fixer momentanément la barre de couplage (7) dans une position définie, qui s'ajusterait dans une position de montage (C) du volet ou de la porte (8) ;
- bloquer le volet ou la porte (8) dans la position d'ouverture (B) ou dans une position intermédiaire (D) au-dessus de la position de montage (C) ;
- aménager le dispositif (16) dans le véhicule (11) ;
- abaisser le volet ou la porte (8) de la position d'ouverture (B) ou de la position intermédiaire (D) dans la position de montage (C) et relier le levier charnière (9) à la barre de couplage (7) ; et
- libérer la barre de couplage (7).

2. Procédé selon la revendication 1, **caractérisé en ce que** la position de montage (C) correspond au demi-angle d'ouverture (α) du volet ou de la porte (8) entre la position de fermeture (A) et la position d'ouverture (B).

3. Procédé selon la revendication 1 ou la revendication 2, **caractérisé en ce qu'**une goupille de sécurité (19) peut être insérée dans la coulisse de guidage (3) pour fixer momentanément la barre de couplage (7).

4. Procédé selon l'une quelconque des revendications 1 à 3, **caractérisé en ce que** la coulisse de guidage (3) du dispositif (16) présente un support de palier (4), qui abrite un ressort à barre de torsion de levier (la) et un ressort à barre de torsion de palier (1b), dans lequel est agencé solidaire en rotation sur le ressort à barre de torsion de palier (1c) un dispositif d'ajustement (2) par lequel la tension préalable du système de ressorts à barre de torsion (1) peut être influencée dans une étape finale du procédé après libération de la barre de couplage (7).

5. Procédé selon l'une quelconque des revendications 3 ou 4, **caractérisé en ce que** la goupille de sécurité (19) fixe momentanément un levier (6) modifiable en longueur de la coulisse de guidage (3) par rapport au support de palier (4).
